# EUROPEAN PATENT APPLICATION

(11) **EP 4 834 631 A1**
(43) Date of publication of application: **04.11.2026**
(21) Application number: 24911916.5
(22) Date of filing: 08.10.2024
(51) Int. Cl.: B60K 15/077, B60K 8/00, B62D 49/00, H01M 8/0432, H01M 8/04313, H01M 8/04694

(54) **WORK VEHICLE**

(30) Priority: 26.12.2023 JP 2023219038
(71) Applicant: KUBOTA CORPORATION, Osaka-shi, Osaka 530-0011 (JP)
(72) Inventor: YAMAGUCHI, Yasuyoshi, Sakai-shi, Osaka 590-0908 (JP)
(74) Representative: Cabinet Beau de Loménie
(86) International application number: PCT/JP2024/035940
(87) International publication number: WO 2025/142022

(57) **Abstract**

A work vehicle includes a fuel cell, a hydrogen tank that accommodates hydrogen supplied to the fuel cell, a sensor that detects a state of the hydrogen in the hydrogen tank, and a notification device that notifies information that depends on a detection value of the sensor.

## Description

### TECHNICAL FIELD

The present disclosure relates to a work vehicle driven by a fuel cell. The present application claims priority based on Japanese Patent Application No. 2023-219038 filed on December 26, 2023, the entire contents of which are incorporated herein by reference.

### BACKGROUND ART

There has been proposed a work vehicle, such as a tractor, that from the perspective of global environmental protection, utilizes a fuel cell generating electric power using hydrogen gas in place of an internal combustion engine utilizing fossil fuel and operates a traveling device and a working device using an electric motor that is driven by the generated electric power (see PATENT LITERATURE 1).

PATENT LITERATURE 2 discloses a vehicle on which a fuel cell and gas tanks are mounted, and a gas station including a gas filling system. This technique enables filling suitable for the gas tanks by a control device on the gas station side filling the gas tanks with gas based on information received from a control device on the vehicle side and a filling protocol incorporated in the control device of the gas station in advance.

### CITATION LIST

### [PATENT LITERATURE]

PATENT LITERATURE 1: Japanese Laid-Open Patent Publication No. 2023-13186
PATENT LITERATURE 2: Japanese Laid-Open Patent Publication No. 2011-33068

### SUMMARY OF THE INVENTION

A work vehicle of the present disclosure includes a fuel cell,
a hydrogen tank that accommodates hydrogen supplied to the fuel cell,
a sensor that detects a state of the hydrogen in the hydrogen tank; and
a notification device that notifies information that depends on a detection value of the sensor.

### BRIEF DESCRIPTION OF DRAWINGS

[FIG. 1] FIG. 1 is a perspective view of a work vehicle.
[FIG. 2] FIG. 2 is a front view of the work vehicle.
[FIG. 3] FIG. 3 is a rear view of the work vehicle.
[FIG. 4] FIG. 4 is a right-side view of the work vehicle.
[FIG. 5] FIG. 5 is a left-side view of the work vehicle.
[FIG. 6] FIG. 6 is a plan view of the work vehicle.
[FIG. 7] FIG. 7 is a perspective view illustrating an example of an internal structure of the work vehicle.
[FIG. 8] FIG. 8 is a perspective view illustrating the vicinity of a filling port of the work vehicle.
[FIG. 9] FIG. 9 is a block diagram illustrating an example of a functional configuration of the work vehicle.
[FIG. 10] FIG. 10 is a flowchart illustrating a control procedure of filling monitoring control.

### DETAILED DESCRIPTION

### <Problem Solved by Present Disclosure>

In the technique described in PATENT LITERATURE 2, since the gas tanks are filled with gas in accordance with the filling protocol on the gas station side, it is possible to fill the gas tanks with an appropriate amount of gas in a short time without being aware of a filling state on the vehicle side. However, communication between the vehicle and the gas station is required, so that this technique cannot be applied to vehicles or gas stations that do not have a communication function. In particular, in the work vehicle as described in PATENT LITERATURE 1, unlike passenger vehicles traveling on a public road, it is expected that the work vehicle is often filled using a simple gas station installed in a field or the like rather than using a well-equipped gas station, and there is a high possibility that communication between the vehicle and the gas station cannot be performed.

An object of the present disclosure is to provide a work vehicle capable of being aware of a state of filling a fuel tank on a work vehicle side.

### <Effects of Present Disclosure>

According to the present disclosure, in the work vehicle driven by a fuel cell, the work vehicle side can be aware of the state of filling the fuel tank.

### <Outline of Embodiment of Present Disclosure>

Hereunder, an outline of an embodiment of the present disclosure will be listed and described.
(1) A work vehicle according to the present embodiment includes
   a fuel cell,
   a hydrogen tank that accommodates hydrogen supplied to the fuel cell,
   a sensor that detects a state of the hydrogen in the hydrogen tank; and
   a notification device that notifies information that depends on a detection value of the sensor.

When the hydrogen tank is filled with hydrogen, the state of the hydrogen in the hydrogen tank, examples of which are a temperature and a pressure, fluctuates. Hence, the work vehicle can be aware of an abnormality in the filling or the like based on the state of the hydrogen. With the work vehicle according to the above embodiment, the state of hydrogen when the hydrogen tank is filled with the hydrogen is detected by the sensor, and the information that depends on the detection value is notified by the notification device, whereby the work vehicle side can be aware of the state of the filling in the event of no communication with a gas station.

(2) The work vehicle according to the above (1) includes a filling port for filling the hydrogen tank with hydrogen, and
the notification device is disposed near the filling port.

With this configuration, a person around the filling port, such as a person (filler) who fills the tank with hydrogen through the filling port, can easily recognize a notification content of the notification device.

(3) The work vehicle according to the above (1) or (2) includes a filling port for filling the hydrogen tank with hydrogen, and
the notification device is a display device, and is disposed in an area contained in a field of view when the filling port is viewed from a predetermined direction.

With this configuration, the person, such as the filler, around the filling port can easily recognize a notification content displayed on the display device.

(4) The work vehicle according to any one of the above (1) to (3) includes a driver's seat, and
the notification device is disposed outside the driver's seat.

With this configuration, a person, such as the filler, outside the driver's seat can easily recognize the notification content of the notification device.

(5) The work vehicle according to the above (4) includes a cabin that surrounds the driver's seat, and
the notification device is disposed outside the cabin.

With this configuration, the recognition of the notification content of the notification device is facilitated for a person outside the cabin, such as a person (filler) who performs filling with hydrogen through the filling port.

(6) In the work vehicle according to any one of the above (1) to (5), the notification device notifies presence or absence of an abnormality in the filling obtained based on the detection value.

With this configuration, the presence or absence of an abnormality in the filling with hydrogen can be directly known via the notification device.

(7) The work vehicle according to the above (6) includes a control device that determines the presence or absence of an abnormality in the filling based on the detection value of the sensor.

(8) In the work vehicle according to the above (7), the control device determines the presence of an abnormality when the detection value of the sensor exceeds a predetermined threshold value.

(9) In the work vehicle according to the above-described (7) or (8), the control device stops the filling of the hydrogen tank with hydrogen based on the determination of the presence of an abnormality.

With the above configurations, it is possible to restrain occurrence of a failure associated with the abnormality in the filling.

(10) In the work vehicle according to any one of the above-described (1) to (9), the notification device notifies the detection value.

With the above configuration, the state of the hydrogen can be directly known.

(11) In the work vehicle according to any one of the above-described (1) to (10), the sensor is a temperature sensor.

With such a configuration, the work vehicle can be aware of information that depends on a temperature during the filling of the hydrogen. For example, when the temperature of the hydrogen excessively rises during the filling with the hydrogen, it is possible to take measures, such as stopping the filling, before the temperature exceeds an allowable temperature of the hydrogen tank. A hydrogen gas supply machine in a gas station or the like, in particular, cannot be aware of the temperature in the hydrogen tank, and if communication with the hydrogen gas supply machine can be performed, this is insufficient to contribute to awareness of an abnormality or the like related to the temperature. In this respect, the configuration of the above (11) is more effective.

### <Details of Embodiment of Present Disclosure>

Hereunder, details of an embodiment of the present disclosure will be described with reference to the drawings.

### [Overall structure of work vehicle]

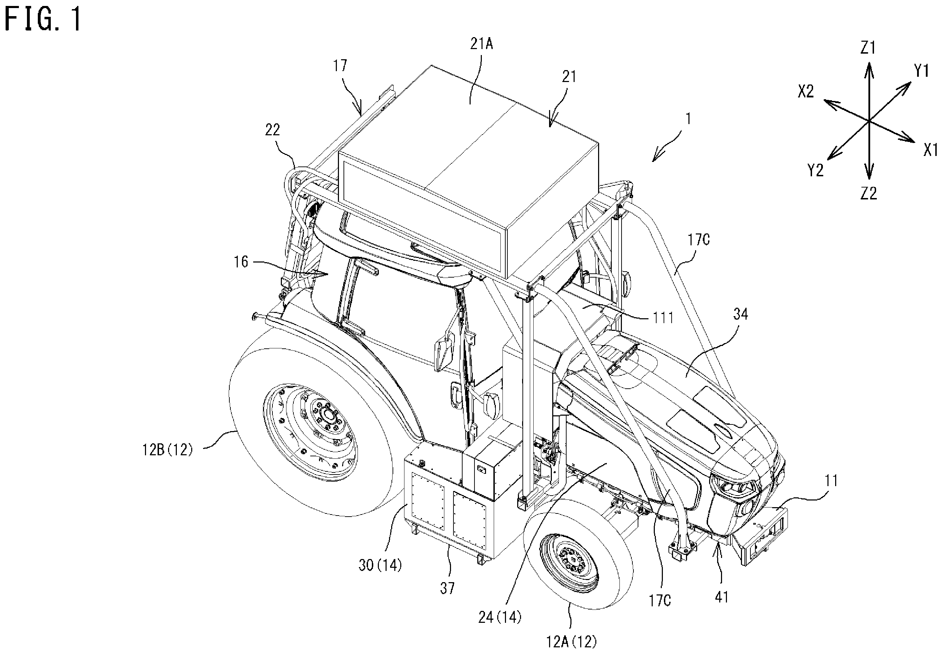

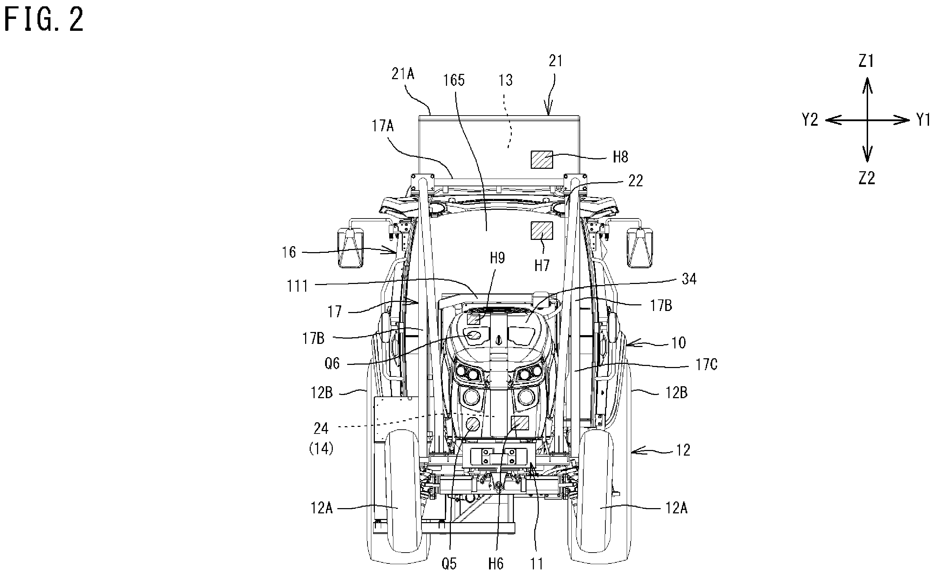

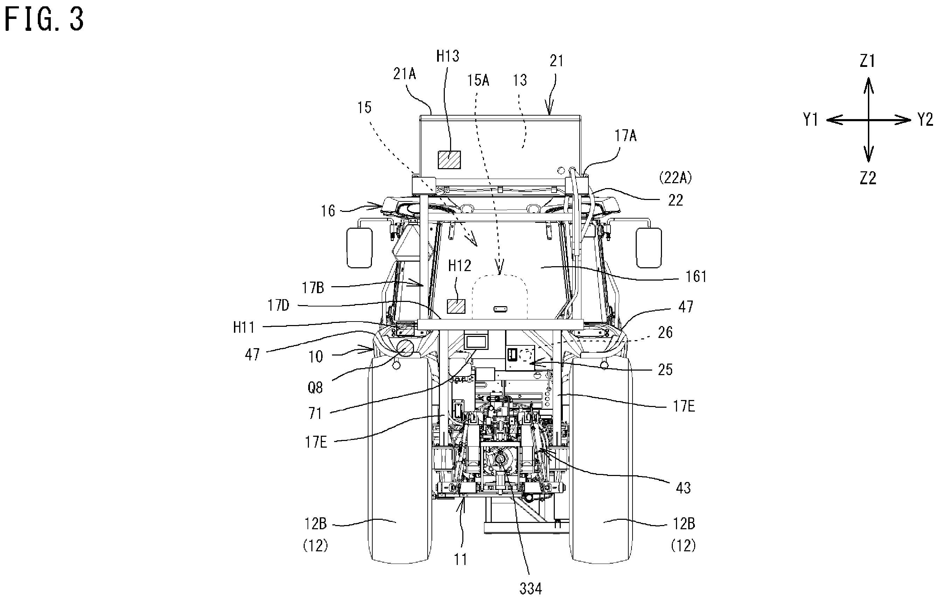

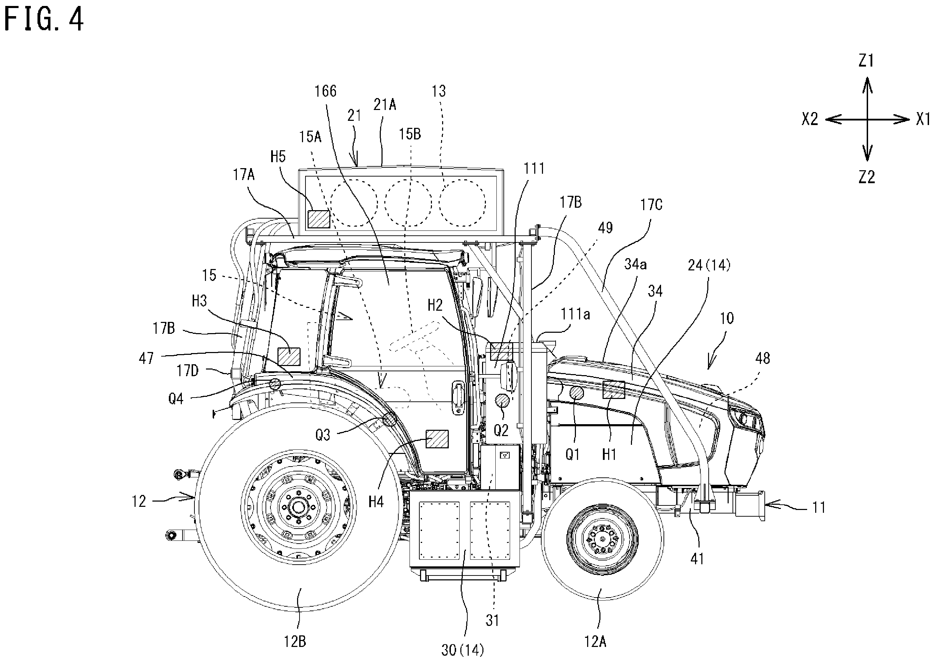

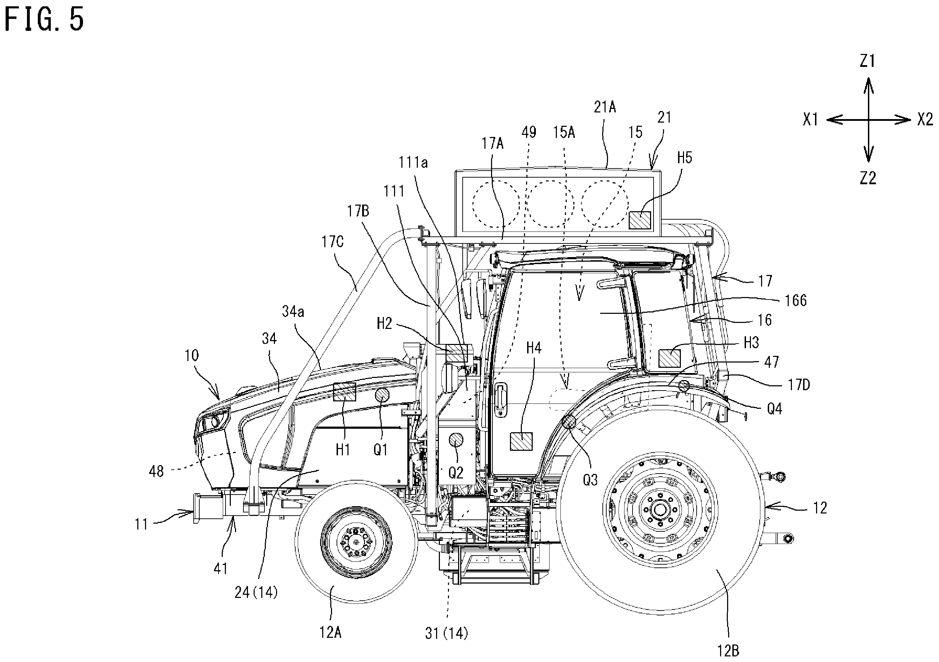

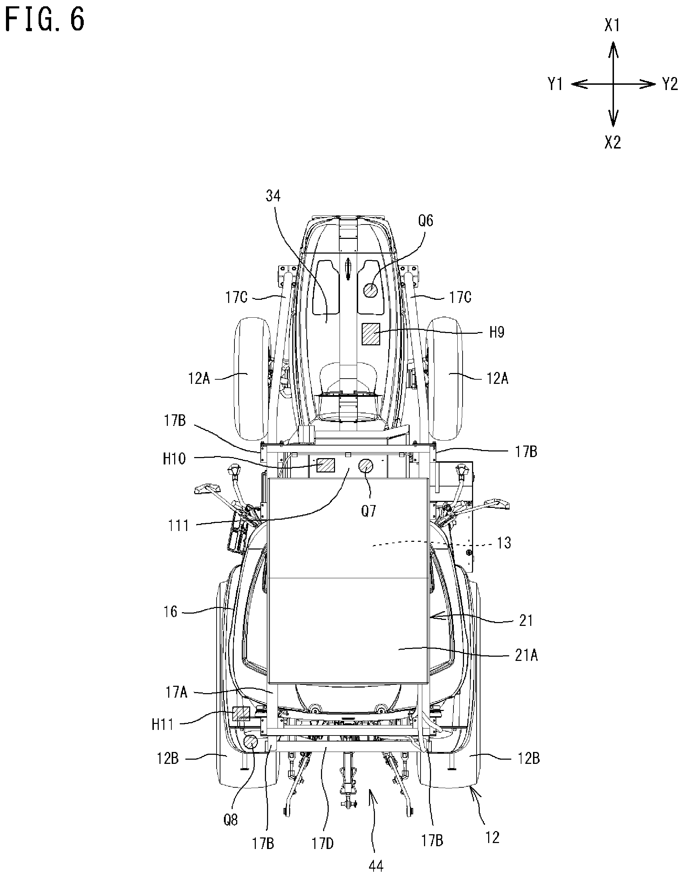

FIG. 1 is a perspective view of a work vehicle. FIG. 2 is a front view of the work vehicle. FIG. 3 is a rear view of the work vehicle. FIG. 4 is a right-side view of the work vehicle. FIG. 5 is a left-side view of the work vehicle. FIG. 6 is a plan view of the work vehicle. In the present description, a direction in which a work vehicle 1 travels forward is defined as front, a direction in which the work vehicle 1 travels backward is defined as rear, a left side of the work vehicle 1 facing forward is defined as left, and a right side of the work vehicle 1 facing forward is defined as right. In FIG. 1 to FIG. 7, front, rear, left, right, upper, and lower directions are indicated by arrows X1, X2, Y1, Y2, Z1, and Z2, respectively.

As illustrated in FIG. 1 to FIG. 6, the work vehicle 1 is a vehicle utilized for farmwork, specifically, a tractor. The work vehicle 1 is indeed not limited to the tractor, and may be a moving body, such as an agricultural machine, a construction machine, and a utility vehicle.

The work vehicle 1 includes a vehicle body 11, a traveling device 12 that supports the vehicle body 11, a driver's seat 15, a cabin 16, and the like. The vehicle body 11 includes a chassis 41, a hood 34, a cover 111, the cabin 16, fenders 47 for rear wheels 12B, and the like.

Specifically, the hood 34 and the cover 111 are mounted on the chassis 41 of the vehicle body 11 sequentially from a front portion toward a rear portion, and the cabin 16 is disposed behind the cover 111.

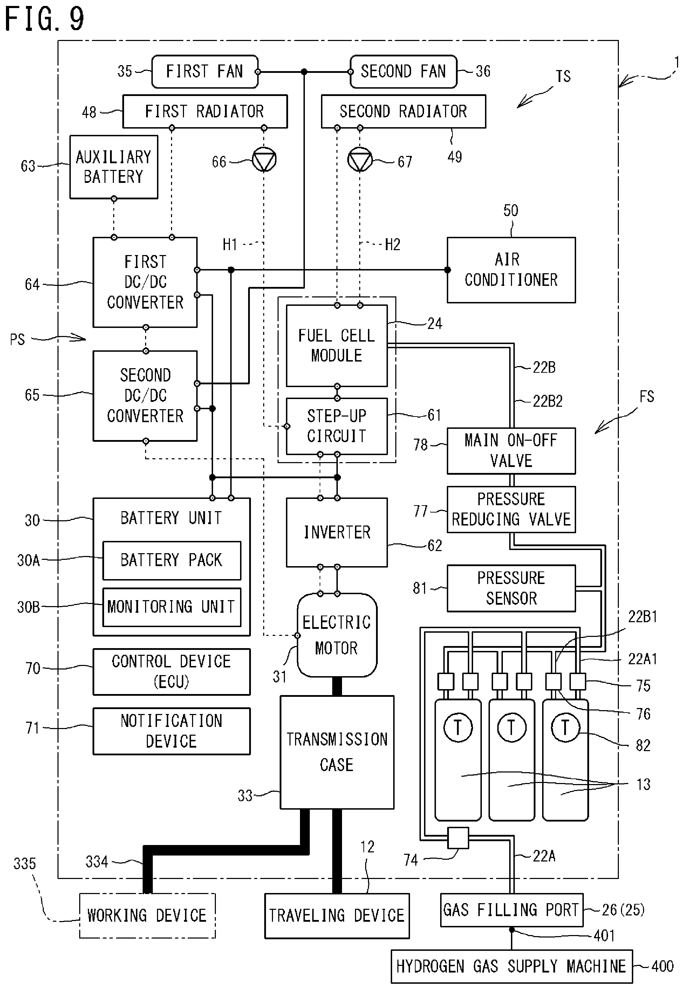

The work vehicle 1 further includes a tank unit 21 including a plurality of tanks 13 (see FIG. 2) that store fuel, and a drive device 14 driven by the stored fuel. The tank unit 21 includes a case 21A having a rectangular-parallelepiped shape and a length (height) in the up-down direction smaller than a length in the front-rear and left-right directions, and the plurality of tanks 13 are accommodated in linear arrangement in the case 21A. The tank unit 21 includes various valves 74 to 78 (see FIG. 9). The tank unit 21 is disposed, with an installation frame 17, above the driver's seat 15 and the cabin 16.

The fuel is hydrogen, and each of the plurality of tanks 13 is a hydrogen tank that stores hydrogen gas. Thus, the work vehicle 1 is a fuel cell vehicle (FCV), and travels using electric power generated by a fuel cell 24 through a chemical reaction between hydrogen and oxygen as an energy source. The fuel cell 24 is also called a "hydrogen fuel cell".

The drive device 14 includes the fuel cell 24, a battery unit 30, and an electric motor 31(see FIG. 4; also referred to as a "motor 31" hereunder). The battery unit 30 incorporates at least one battery pack 30A (see FIG. 9) that stores electric power output from the fuel cell 24.

The work vehicle 1 includes a pipe 22 for the hydrogen gas and a filling unit 25. The filling unit 25 has a filling port (receptacle) 26 to be connected to a filling nozzle 401 of a hydrogen gas supply machine 400 (see FIG. 9) that is different from the work vehicle 1, such as a gas station. The hydrogen gas is supplied from the filling port 26 and is supplied to the tanks 13 through the pipe 22. The hydrogen gas in the tanks 13 is supplied to the fuel cell 24 through the pipe 22. Specific configurations of the filling unit 25 and the pipe 22 will be described later.

The cabin 16 is a partitioned driver's cabin including front pillars, rear pillars, and a roof, and surrounds the driver's seat 15. The driver's seat 15 includes a seat 15A and a steering device 15B. The steering device 15B includes a steering wheel, levers, instruments, and the like. The front pillars of the cabin 16 are arranged on the front-left and front-right sides of the driver's seat 15, and the rear pillars are arranged on the rear-left and rear-right sides of the driver's seat 15. The cabin 16 includes a front panel 165 (see FIG. 2) between the front pillars on the left and right, a rear panel 161 (see FIG. 3) between the rear pillars on the left and right, and side panels 166 between the front pillars and the rear pillars. The side panels 166 include openable and closeable doors. The front panel 165, the rear panel 161, and the side panels 166 are formed of a transparent material, such as glass and a synthetic resin material, and visibility is secured from an inside of the cabin 16 to an outside and from the outside to the inside. The work vehicle 1 may include a canopy or a rollover protective structure (ROPS) in place of the cabin 16.

The traveling device 12 includes front wheels 12A and the rear wheels 12B. These sets of wheels are each arranged bilaterally symmetrically with respect to the vehicle body 11. One or both sets of the front wheels 12A and the rear wheels 12B are rotated by power of the motor 31. One or both sets of the wheels 12A and 12B (drive wheels) rotated by the power of the motor 31 may be crawlers (caterpillars). Upper and front sides of the rear wheels 12B are covered with the fenders 47.

As illustrated in FIG. 4 and FIG. 5, a first radiator 48, the fuel cell 24, and a second radiator 49 are mounted, sequentially from the front side toward the rear side, on a corresponding portion across the front wheels 12A on the chassis 41. The first radiator 48 and the fuel cell 24 are covered with the hood 34, and the second radiator 49 is covered with the cover 111.

As illustrated in FIG. 4, an upper surface 111a of the cover 111 is at a level higher than an uppermost end of the hood 34, but lower than an uppermost end of the steering wheel 15B of the driver's seat 15. A rear end portion of the hood 34 is located at a position lower than that of the cover 111, and an upper surface 34a of the hood 34 is formed in a tapered shape in which a level gradually decreases from the rear end portion toward a front end portion. This results in a structure that hardly obstructs a forward field of view from an operator sitting on the driver's seat 15.

### [Internal structure of work vehicle]

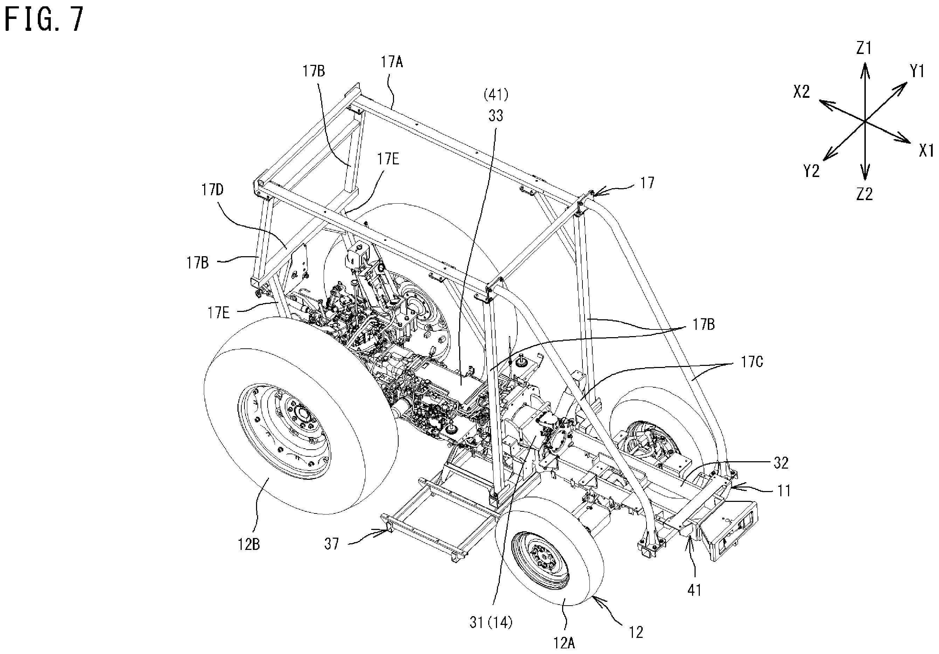

FIG. 7 is a perspective view illustrating an example of an internal structure of the work vehicle.

As illustrated in FIG. 7, the chassis 41 constituting the vehicle body 11 is composed of steel frames having a shape elongated in the front-rear direction, and includes a front frame 32 and a transmission case 33.

The transmission case 33 is coupled to a rear portion of the front frame 32, and a vehicle frame of the vehicle body 11 is formed by the transmission case 33 and the front frame 32.

The installation frame 17 for disposing the tank unit 21 above the cabin 16 is coupled to the chassis 41. The installation frame 17 includes an overhead frame 17A having a substantially rectangular shape in which the front-rear direction is longer than the left-right direction, a plurality of pillars 17B that support the overhead frame 17A from below, and a pair of left and right reinforcing frames 17C that are coupled to front end portions of the overhead frame 17A. The installation frame 17 also includes a base frame 17D to which lower ends of the left and right pillars 17B on the rear side are coupled, and a pair of left and right lower frames 17E that extend downward from the base frame. The base frame 17D is disposed substantially horizontally and extends in the left-right direction.

The tank unit 21 is coupled to the overhead frame 17A while being horizontally placed. As illustrated in FIG. 3, the overhead frame 17A is located at a position higher than that of the roof of the cabin 16. Thus, the tank unit 21 is disposed above the roof of the cabin 16.

As illustrated in FIG. 7, the reinforcing frames 17C are reinforcing diagonal members that are inclined downward from the front end portions of the overhead frame 17A through to the front frame 32. Thus, rigidity of the installation frame 17 in the front-rear direction is reinforced as compared with a case where the overhead frame 17A and the tank unit 21 are supported only by the pillars 17B.

A support frame 37 for assisting the vehicle body 11 in supporting a battery unit 30 is coupled to the chassis 41 of the work vehicle 1.

Specifically, the motor 31 is mounted on the front frame 32 of the chassis 41, and the support frame 37 is fixed to a portion corresponding to the motor 31 in the front frame 32. The support frame 37 is composed of, for example, frame members made of metal, and is fixed in a cantilevered state so as to protrude rightward from the front frame 32.

The transmission case 33 located behind the motor 31 internally includes a power transmission mechanism. The power transmission mechanism includes a transmission, a clutch, and a differential gear, and decreases or increases a rotational speed of an output shaft of the motor 31 to transmit the rotation to the traveling device 12.

The power transmission mechanism inside the transmission case 33 includes a distribution mechanism that outputs a part of the power of the motor 31 to a PTO shaft 334 (see FIG. 9). The PTO shaft 334 is an output shaft protruding rearward from the transmission case 33.

A coupling device 44 (see FIG. 6) is configured as, for example, a three-point linkage for coupling, to the rear of the vehicle body 11, a working device 335 (see FIG. 9; also referred to as "implement") for performing intended farmwork, and is fixed to the transmission case 33. The working device 335 is, for example, a cultivator, a baler, or the like.

Rotational movement of the PTO shaft 334 is transmitted to an input shaft of the working device 335 that is coupled to the coupling device 44, for example, during driving of the traveling device 12. Thus, the work vehicle 1 can drive the working device 335 using the power of the motor 31 while traveling in a field or the like.

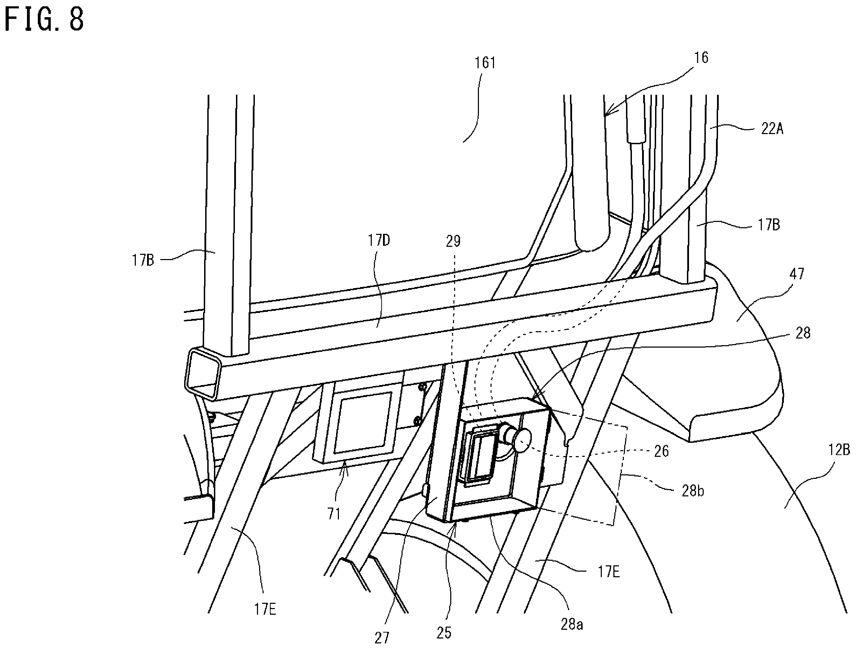

FIG. 8 is a perspective view illustrating the vicinity of the filling port of the work vehicle.

The filling unit 25 includes a housing 28 that accommodates the filling port 26. The housing 28 includes a case 28a and a lid 28b. The case 28a has walls at the top, bottom, left, right, and front, and opens to the rear. The lid 28b is openable and closeable, and can close an opening of the case 28a. The filling port 26 is provided in the housing 28 so as to open to the rear or either side of the vehicle. A pipe 22A is coupled to the filling unit 25 (filling port 26) from a front of the housing 28.

With this configuration, the filling port 26 is protected by the housing 28. The pipe 22A is coupled to the filling unit 25 through a space formed between the housing 28 and a rear portion of the vehicle body 11. A connection portion 29 between the pipe 22A and the housing 28 is not exposed to a wide space behind the vehicle, so that the connection portion 29 is protected.

In the case of the present embodiment, the filling unit 25 (filling port 26) is located behind the cabin 16 and between the rear wheels 12B on opposite sides in a vehicle-width direction. The filling unit 25 (filling port 26) is protected from the left-right direction by the rear wheels 12B and is protected from the front by the cabin 16.

The filling unit 25 (filling port 26) is disposed below the base frame 17D of the installation frame 17. The filling unit 25 (filling port 26) is supported by the base frame 17D via a bracket 27. The filling unit 25 (filling port 26) is protected from above by the base frame 17D. The filling unit 25 (filling port 26) is disposed between the left and right lower frames 17E.

The base frame 17D is provided with a notification device 71. As will be described later, the notification device 71 notifies information that depends on states of hydrogen in the tank(s) 13. The notification device 71 is disposed below the base frame 17D. The notification device 71 is disposed adjacently to the filling unit 25 (filling port 26). The notification device 71 is disposed adjacently to the filling unit 25 in the left-right direction. Thus, when the work vehicle 1 is viewed from the rear, the filling unit 25 and the notification device 71 come into the field of vision. Hence, a person (filler) performing the filling with hydrogen gas through the filling port 26 can easily recognize the notification device 71. The notification device 71 is disposed outside the driver's seat 15, specifically, outside the cabin 16. Hence, a person outside the cabin 16 can easily recognize the notification device 71.

The notification device 71 of the present embodiment is a display device. The display device is a display panel that displays characters, figures, and so forth, such as a liquid crystal panel and an organic electroluminescence (EL) panel. A display surface of the notification device 71 faces rearward. The notification device 71 is not limited to the display device, and may be configured with a lamp, such as a light-emitting diode (LED), that emits light, a speaker, a buzzer, or the like that emits sound, a sound effect, or the like. When the notification device 71 is a speaker or a buzzer, even a person distant from the notification device 71 can recognize a notification. The notification device 71 may be configured with two or more of the display panel, the lamp, the speaker, and the buzzer.

The notification device 71 is controlled by a control device 70 described later. The notification device 71 notifies the information that depends on states of the hydrogen gas in the tank(s) 13 under control of the control device 70. In particular, the notification device 71 notifies the information that depends on states of the hydrogen gas being filled into the tank(s) 13. The control between the control device 70 and the notification device 71 will be described later.

### [Functional configuration of work vehicle]

FIG. 9 is a block diagram illustrating an example of a functional configuration of the work vehicle.

As illustrated in FIG. 9, a functional system of the work vehicle 1 includes a fuel system FS, a power system PS, and a temperature control system TS.

Components of the fuel system FS include at least one tank 13, the valves 74 to 78, sensors 81 and 82, and the like. Components of the temperature control system TS include a plurality of the radiators 48 and 49, an air conditioner 50, and the like. Components of the power system PS include the fuel cell 24, a step-up circuit 61, an inverter 62, the motor 31, the transmission case 33, DC-DC converters 64 and 65, the battery unit 30, and the like.

The work vehicle 1 of the present embodiment includes a plurality of the tanks 13, for example, three tanks 13. Each of the tanks 13 is connected to the pipe 22A and a pipe 22B. The pipe 22A is a gas pipe that links the filling port 26 and each of the tanks 13. Hydrogen gas is introduced into the filling port 26 from the hydrogen gas supply machine 400, such as a gas station. The pipe 22A guides the hydrogen gas introduced into the filling port 26 to each of the tanks 13.

The pipe 22A is provided with the on-off valve 74. The on-off valve 74 switches between the introduction of the hydrogen gas and stop (shut-off) of the introduction. For example, the on-off valve 74 can be opened when it is detected that hydrogen gas is introduced into the filling port 26, and can be closed when it is detected that hydrogen gas is not introduced. The detection of the introduction of the hydrogen gas from the filling nozzle 401 into the filling port 26 can be performed, for example, by detecting, with a contact sensor or a non-contact sensor, the filling nozzle 401 that is connected to the filling port 26. Alternatively, it can be performed by detecting a change in pressure at the filling port 26.

The pipe 22A is branched into a plurality of portions on a downstream side, and branch portions 22A1 are connected to the respective tanks 13. The check valves 75 are provided to the respective branch portions 22A1 of the pipe 22A. Each of the check valves 75 restrains backflow of the hydrogen gas from each of the tanks 13 to the filling port 26 side.

The pipe 22B is a gas pipe that links the fuel cell 24 and the tanks 13. The pipe 22B guides the hydrogen gas stored in each of the tanks 13 to the fuel cell 24. The pipe 22B is branched into a plurality of portions on an upstream side, and branch portions 22B1 are connected to the respective tanks 13. The on-off valves 76 are provided to the respective branch portions 22B1 of the pipe 22B. Each of the on-off valves 76 switches between release of the hydrogen gas in each of the tanks 13 and stop (shut-off) of the release.

The pressure reducing valve 77 and the main on-off valve 78 are provided in a merging portion 22B2 of the pipe 22B. The pressure reducing valve 77 reduces pressures of the hydrogen gas released from the tanks 13. Pressures of the hydrogen gas inside the tanks 13 are each, for example, 35 megapascals or more, whereas pressures of the hydrogen gas after being decompressed by the pressure reducing valve 77 are, for example, about 2 atmospheres. The main on-off valve 78 switches between supply of the hydrogen gas decompressed by the pressure reducing valve 77 to the fuel cell 24 and stop (shut-off) of the supply. The on-off valves 74,76, and 78 are each configured with an electromagnetic valve operated by a solenoid, an electric valve operated by a motor, or the like.

A pressure sensor 81 is provided between a plurality of the on-off valves 76 and the pressure reducing valve 77. The pressure sensor 81 is provided in the merging portion 22B2 of the pipe 22B. The pressure sensor 81 detects the pressures of the hydrogen gas released from the plurality of tanks 13. The pressures detected by the pressure sensor 81 correspond to the pressures of the hydrogen gas in the tanks 13 that release the hydrogen gas through the on-off valves 76. The tanks 13 are provided with the temperature sensors 82. The temperature sensors 82 detect temperatures of the hydrogen gas in the tanks 13.

The hydrogen gas released from the tanks 13 and flowing through the pipe 22B is supplied to the fuel cell 24. The fuel cell 24 is, for example, a battery module configured by arranging, in an aligned manner, a plurality of single cells each having a positive electrode and a negative electrode in a stacked state. The fuel cell 24 integrates electric power generated by the single cells and generates electric power necessary for driving the electric motor 31.

The fuel cell 24 is connected to the second radiator 49 through a cooling flow path H2. Temperatures of electrodes of the fuel cell 24 are adjusted to predetermined temperatures by a coolant circularly supplied from the second radiator 49. This enables the fuel cell 24 to maintain high power generation efficiency.

The fuel cell 24 is electrically connected to an input side of the step-up circuit 61, and an output side of the step-up circuit 61 is electrically connected to a direct-current side of the inverter 62. The step-up circuit 61 increases a voltage input from the fuel cell 24, and outputs the increased voltage to the inverter 62 and the battery unit 30.

The inverter 62 is electrically connected to the motor 31. The inverter 62 converts direct current input from the step-up circuit 61 into three-phase alternating current and outputs the three-phase alternating current to the motor 31. Thus, subsequent to the step-up of the voltage and the conversion into the alternating current, the electric power generated by the fuel cell 24 is transferred to the motor 31.

The motor 31 includes a rotor and a stator having a plurality of coils, and drives the output shaft at predetermined torque and a rotational speed. For example, only one motor 31 is mounted on the work vehicle 1, and the output shaft of the motor 31 is connected to the transmission case 33. The motor 31 may be mounted in plural. For example, when two types of the motors 31 for the front wheels 12A and the rear wheels 12B are provided, the power of the motors 31 may be output to the front wheels 12A and the rear wheels 12B, respectively.

The power transmission mechanism of the transmission case 33 outputs all or a part of the power of the motor 31 to the traveling device 12. When operating the working device 335, the power transmission mechanism outputs the power of the motor 31 also to the PTO shaft 334.

The battery unit 30 is an electric storage device that absorbs load variation of the fuel cell 24. Specifically, the battery unit 30 temporarily charges electric power supplied from the step-up circuit 61, discharges the power during high load, and supplies the inverter 62 with electric power for the drive for the motor 31.

The battery unit 30 includes a battery pack 30A and a monitoring unit 30B. The battery pack 30A includes at least one cell. The cell is of a charge-discharge type, such as a lithium ion battery cell. An output voltage of the battery unit 30 is, for example, 24 V.

The monitoring unit 30B includes a processor that performs switching control of operation (charging and discharging) of the battery pack 30A and measurement of a charging state (e.g., SOC).

The work vehicle 1 includes a plurality of electrical components that operate at a voltage lower than that for the motor 31. These electrical components are supplied with direct-current power with a voltage stepped down by a step-down circuit.

The plurality of electrical components include, for example, an auxiliary battery 63, the radiators 48 and 49, and the air conditioner 50. The step-down circuit is, for example, a plurality of the DC-DC converters 64 and 65 (also referred to as a "first converter 64" and a "second converter 65" hereunder) having different output voltages.

The first converter 64 steps down a direct-current voltage input from the step-up circuit 61 to a first voltage (e.g., 12 volts) and supplies the first voltage to the auxiliary battery 63, the air conditioner 50, and the like.

The second converter 65 steps down a direct-current voltage input from the step-up circuit 61 to a second voltage (e.g., 24 volts) and supplies the second voltage to the radiators 48 and 49. The inverter 62 and both the converters 64 and 65 are positioned in a portion corresponding to the driver's seat 15 in the chassis 41. Note that the second voltage of the second converter 65 may be supplied to the battery unit 30.

As described above, the first radiator 48 is disposed in front of the fuel cell 24, and the second radiator 49 is disposed behind the fuel cell 24 (see FIG. 2).

These radiators 48 and 49 constitute a cooling system that cools, with a coolant (refrigerant), the electrical components, such as the fuel cell 24, the step-up circuit 61, the inverter 62, the motor 31, and the first and second converters 64 and 65.

The first radiator 48 has, connected thereto, a cooling flow path H1 through which the coolant is circulated by a pump 66, and the coolant is cooled by heat exchange with external air. The first radiator 48 includes a first fan 35 for promoting the heat exchange with the external air.

Cooling targets, in the cooling flow path H1, of the first radiator 48 are, for example, electrical components (heat generating components), such as the step-up circuit 61, the inverter 62, the motor 31, and the first and second converters 64 and 65.

The second radiator 49 has, connected thereto, the cooling flow path H2 through which the coolant is circulated by a pump 67, and the coolant is cooled by heat exchange with external air. The second radiator 49 includes a second fan 36 for promoting the heat exchange with the external air.

A cooling target of the second radiator 49 through the cooling flow path H2 is, for example, an electrical component, such as the fuel cell 24.

The auxiliary battery 63 is an electric storage device that supplies electric power to a display, a communication device, and the like mounted on the driver's seat 15. The auxiliary battery 63 is, for example, a charge-discharge-type lead-acid battery. An output voltage of the auxiliary battery (second battery) 63 is, for example, 12 V, and is lower than the output voltage (e.g., 24 V) of the battery unit (first battery) 30.

The auxiliary battery 63 may also be used as an auxiliary power supply that supplies electric power to the control device 70, which will be described later, when the fuel cell 24 is stopped.

As illustrated in FIG. 9, the work vehicle 1 further includes the control device 70. The control device 70 may include, for example, an electronic control unit (ECU) that communicates with various electrical components in accordance with a communication protocol, such as a controller area network (CAN). For example, the control device 70 includes an ECU that integrally controls operation of the entire system from the filling of the tanks 13 with hydrogen gas and the power generation by the fuel cell 24 to the output of the power, and an ECU involved in individual control of the tank unit 21 including the tanks 13, the valves 74 to 78, and the sensors 81 and 82, and the like. Thus, the control device 70 performs opening-closing control of the valves 74 to 78 included in the tank unit 21, acquisition of detection values of the pressure sensor 81 and the temperature sensors 82, processing for the acquired detection values, and the like.

The control device 70 executes, for example, filling monitoring control for monitoring filling states of hydrogen gas from the hydrogen gas supply machine 400 to the tanks 13. Specifically, the control device 70 determines whether an abnormality occurs in the filling state of the hydrogen gas. Hereunder, contents of the filling monitoring control will be described.

### [Filling monitoring control]

The control device 70 acquires detection values of the temperature sensors 82 for the filling monitoring control. When the tanks 13 are filled with hydrogen gas, the temperatures in the tanks 13 rise. For example, the temperatures in the tanks 13 rise rapidly as a filling speed of the hydrogen gas from the hydrogen gas supply machine 400 to the tanks 13 increases. An allowable temperature of the hydrogen gas is set to the tanks 13. For example, the allowable temperature is set to 85°C. Such a structure is adopted for the tanks 13 that the hydrogen gas is forcibly leaked when any of the internal temperatures of the hydrogen gas rise above the allowable temperature.

The control device 70 monitors whether any of the temperatures of the hydrogen gas in the tanks 13 detected by the temperature sensors 82 exceed a predetermined threshold value. The predetermined threshold value is a value equal to or lower than the allowable temperature for the tanks 13. When the allowable temperature of the tanks 13 is 85°C, the threshold value is set to, for example, 80°C. The control device 70 acquires the detection values from the temperature sensors 82, and compares the detection values with the predetermined threshold value to determine presence or absence of an abnormality in the temperature of the hydrogen gas.

When determining that there is an abnormality in the temperature of the hydrogen gas, the control device 70 controls and activates the notification device 71. The notification device 71 can notify information indicating "abnormality". For example, in a case where the notification device 71 is a display device, information indicating that an abnormality occurs in the filling with the hydrogen gas, information indicating that the temperature of the hydrogen gas rises, information indicating necessity to stop the filling, information on a state of the hydrogen gas and the filling state, information for attracting attention, and the like, can be displayed with characters. In a case where the notification device 71 is a speaker, these pieces of information can be issued by voice. In a case where the notification device 71 is a lamp, occurrence of an abnormality, calling attention, and the like can be notified by turning on or blinking the lamp. The notification device (display device) 71 can display the detection values detected by the temperature sensors 82 as they are. A user can take an action for eliminating the abnormality based on the notification of the notification device 71, for example, stop the filling with the hydrogen gas.

When determining that there is an abnormality in the temperature of the hydrogen gas, the control device 70 can close the on-off valves 74 to stop the filling. This makes it possible to continue filling the tanks 13 with hydrogen gas even after the abnormality occurs, and restrain further rise of the temperature of the hydrogen gas. The control device 70 may notify, using the notification device 71, that the filling is stopped.

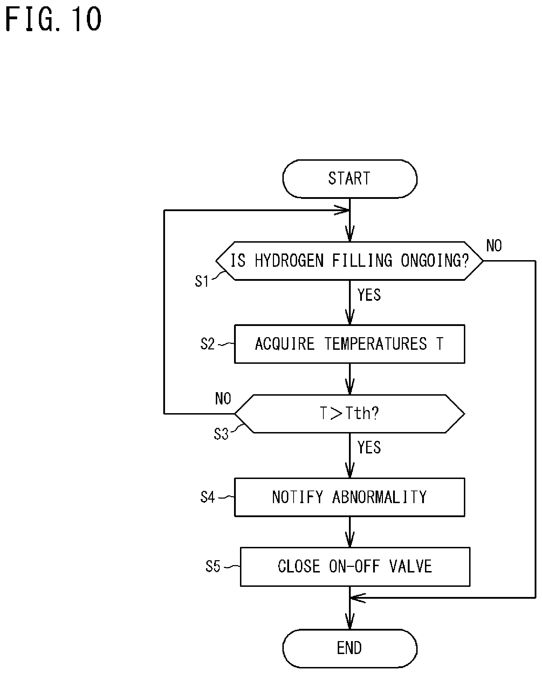

FIG. 10 is a flowchart illustrating a control procedure of the filling monitoring control.

A procedure of abnormality determination and notification in the filling monitoring control will be described with reference to the flowchart of FIG. 10.

In step S1, the control device 70 determines whether filling of the tanks 13 with hydrogen gas from the hydrogen gas supply machine 400 is ongoing. For example, it is determined whether the filling nozzle 401 of the hydrogen gas supply machine 400 is inserted into the filling port 26. When determining that the filling with hydrogen gas is performed, the control device 70 acquires detection values from the temperature sensors 82 in step S2.

Next, in step S3, the control device 70 determines whether detection values T exceed a predetermined threshold value Tth. When any of the detection values T exceeds the threshold value Tth, the processing proceeds to step S4, while when the detection values T do not exceed the threshold value Tth, the processing returns to step S1. In step S4, the control device 70 controls the notification device 71 to notify an abnormality. Next, the control device 70 closes the on-off valves 74 to stop the introduction of the hydrogen gas from the filling port 26 into the tanks 13.

### [Arrangement examples of filling port and notification device]

In the above-described embodiment (see FIG. 3 and FIG. 8), the filling unit 25 (filling port 26) and the notification device 71 are arranged at the rear portion (rear surface) of the work vehicle 1; however, this is not limiting. For example, the filling port 26 and the notification device 71 can be arranged on side surfaces, an upper surface, or a front surface of the work vehicle 1. In any case, the notification device 71 is disposed near the filling port 26 such that the recognition is facilitated for a person (filler) who performs filling with hydrogen through the filling port 26. Here, "near the filling port 26" refers to, for example, an area within a radius of 1 m from the filling port 26. Alternatively, the notification device 71 is disposed on a surface common to a surface of the work vehicle 1 on which the filling port 26 is disposed.

Hereunder, the arrangement examples of the filling port 26 and the notification device 71 will be described with reference to FIG. 2 to FIG. 6. In FIG. 2 to FIG. 6, arrangement examples of the filling port 26 are denoted by reference sign Q, and arrangement examples of the notification device 71 are denoted by reference sign H.

As illustrated in FIG. 4 and FIG. 5, the filling port 26 can be provided on side surfaces (Q1) of the hood 34, side surfaces (Q2) of the cover 111, side surfaces (Q3, Q4) of the fenders 47, and the like. The notification device 71 can be disposed on the side surfaces (H1) of the hood 34, the side surfaces (H2) of the cover 111, the side surfaces (H3, H4) of the cabin 16, the side surfaces (H5) of the tank unit 21, and the like.

With the above arrangements, both the filling port 26 and the notification device 71 can fall within the field of view when the work vehicle 1 is viewed from the sides in the left-right direction. When the notification device 71 is disposed on either side surface (H5) of the tank unit 21, because of the relatively high position, the notification device 71 can be easily recognized even from a distant place.

As illustrated in FIG. 2, the filling port 26 can be disposed on a front surface (Q5) of the hood 34 or the like. Similarly, the notification device 71 can also be disposed on the front surface (H6) of the hood 34 or the like. Further, the notification device 71 can be disposed on a front surface (H7) of cabin 16, a front surface (H8) of the tank unit 21, or the like.

With the above arrangements, both the filling port 26 and the notification device 71 can fall within the field of view when the work vehicle 1 is viewed from the front. When the notification device 71 is disposed on the front surface (H8) of the tank unit 21, because of the relatively high position, the notification device 71 can be easily recognized even from a distant place.

As illustrated in FIG. 6, the filling port 26 can be disposed on an upper surface (Q6) of the hood 34, an upper surface (Q7) of the cover 111, upper surfaces (Q8) of the fenders 47, and the like. The notification device 71 can also be disposed on the upper surface (H9) of the hood 34, the upper surface (H10) of the cover 111, the upper surfaces (H11) of the fenders 47, or the like. With the above arrangements, both the filling port 26 and the notification device 71 can fall within the field of view when the work vehicle 1 is viewed from above.

As illustrated in FIG. 3, the filling port 26 can be disposed on rear surfaces (Q8) of the fenders 47 or the like. The notification device 71 can be disposed on rear surfaces (H11) of the fenders 47, a rear surface (H12) of the cabin 16, a rear surface (H13) of the tank unit 21, or the like. When the notification device 71 is disposed on the rear surface (H13) of the tank unit 21, because of the relatively high position, the notification device 71 can be easily recognized even from a distant place.

In addition to the above, for example, one of the filling port 26 and the notification device 71 is disposed on the rear surface of the work vehicle 1 and the other is disposed on either side surface of the work vehicle 1, thereby enabling both the filling port 26 and the notification device 71 to fall within the field of view when the work vehicle 1 is viewed from the rear-oblique sides. Alternatively, one of the filling port 26 and the notification device 71 is disposed on the front surface of the work vehicle 1 and the other is disposed on either side surface of the work vehicle 1, thereby enabling both the filling port 26 and the notification device 71 to fall within the field of view when the work vehicle 1 is viewed from the front-oblique sides. Alternatively, one of the filling port 26 and the notification device 71 is disposed on the upper surface of the work vehicle 1 and the other is disposed on either side surface of the work vehicle 1, thereby enabling both the filling port 26 and the notification device 71 to fall within the field of view when the work vehicle 1 is viewed from the upper-oblique sides.

When the notification device 71 is a display device, the notification device can be disposed not only outside but also inside the cabin 16, and a display surface can be oriented to the outside of the cabin 16. In this case, a display content of the notification device 71 can also be recognized from the outside of the cabin 16.

### [Other modifications]

The embodiment disclosed herein is illustrative in all respects and is not restrictive. The scope of the present disclosure is not limited to the above-described embodiment, and includes all modifications within the scope equivalent to the configurations described in the claims.

When determining that there is an abnormality in filling with hydrogen gas, a control device 70 may perform only notification using a notification device 71 (step S4 in FIG. 10) without stopping the filling with the hydrogen gas (step S5 in FIG. 10). In this case, the notification device 71 can continuously perform the notification until the filler stops the filling. When the filling with the hydrogen gas is stopped, the notification device 71 can notify information indicating that the filling with the hydrogen gas is stopped.

The notification device 71 may include a control device (ECU). In this case, the notification device 71 can acquire detection values of temperature sensors 82, determine the presence or absence of an abnormality based on the detection values, and notify information that depends on the detection values, such as a determination result.

The notification device 71 may be disposed inside a driver's seat 15 or inside a cabin 16. In this case, a driver in the driver's seat 15 can easily recognize a notification content. When the notification device 71 is a display device, each of a hood, a cover, the cabin, and the like of a work vehicle 1, or the whole of these can be used as a display panel.

The notification device 71 may notify information that depends on a detection value of a pressure sensor 81. In this case, the control device 70 can acquire a detection value of the pressure sensor 81, determine the presence or absence of an abnormality in the filling based on the detection value, and notify, using the notification device 71, information that depends on the detection value, such as a determination result.

The work vehicle 1 of the above embodiment includes the plurality of tanks 13, but may include one tank 13.

The work vehicle 1 may have a communication function of communicating with a hydrogen gas supply machine 400.

### REFERENCE SIGNS LIST

- 1:: work vehicle
- 13:: tank
- 15:: driver's seat
- 16:: cabin
- 70:: control device
- 71:: notification device
- 82:: temperature sensor

## Claims

1. A work vehicle comprising:
a fuel cell;
a hydrogen tank that accommodates hydrogen supplied to the fuel cell;
a sensor that detects a state of the hydrogen in the hydrogen tank; and
a notification device that notifies information that depends on a detection value of the sensor.

2. The work vehicle according to claim 1, comprising a filling port for filling the hydrogen tank with hydrogen, wherein
the notification device is disposed near the filling port.

3. The work vehicle according to claim 1 or 2, comprising a filling port for filling the hydrogen tank with hydrogen, wherein
the notification device is a display device, and is disposed in an area contained in a field of view when the filling port is viewed from a predetermined direction.

4. The work vehicle according to any one of claims 1 to 3, comprising a driver's seat, wherein
the notification device is disposed outside the driver's seat.

5. The work vehicle according to claim 4, comprising a cabin that surrounds the driver's seat, wherein
the notification device is disposed outside the cabin.

6. The work vehicle according to any one of claims 1 to 5, wherein the notification device notifies presence or absence of an abnormality in the filling obtained based on the detection value.

7. The work vehicle according to claim 6, comprising a control device that determines the presence or absence of an abnormality in the filling based on the detection value of the sensor.

8. The work vehicle according to claim 7, wherein the control device determines the presence of an abnormality when the detection value of the sensor exceeds a predetermined threshold value.

9. The work vehicle according to claim 7 or 8, wherein the control device stops the filling of the hydrogen tank with hydrogen based on the determination of the presence of an abnormality.

10. The work vehicle according to any one of claims 1 to 9, wherein the notification device notifies the detection value.

11. The work vehicle according to any one of claims 1 to 10, wherein the sensor is a temperature sensor.
